# EUROPEAN PATENT APPLICATION

(11) **EP 4 815 435 A1**
(43) Date of publication of application: **30.09.2026**
(21) Application number: 26167917.9
(22) Date of filing: 26.03.2026
(51) Int. Cl.: H04N 7/18, G08B 13/196, H04N 21/454, H04N 21/2343, H04N 21/2347

(54) **SYSTEMS AND METHODS FOR IMPLEMENTING ENCRYPTED PRIVACY ZONES**

(30) Priority: 26.03.2025 US 202563778267 P; 25.03.2026 US 202619578280
(71) Applicant: Tyco Fire & Security GmbH, 8212 Neuhausen am Rheinfall (CH)
(72) Inventor: FEE, Paul, Belfast, BT8 6ZN (GB); MCCAMBRIDGE, Johnson, Bangor, BT20 3NR (GB); WALSH, Matthew, 8212 Neuhausen am Rheinfall (CH); NEILL, Terence, Lisburn, BT27 5DS (GB); WRIGHT, William, 8212 Neuhausen am Rheinfall (CH)
(74) Representative: Meissner Bolte Nürnberg

(57) **Abstract**

Example implementations include a method, apparatus and computer-readable medium of recording one or more images, comprising obtaining a non-private video stream of a scene captured by a camera, wherein the non-private video stream comprises a non-private area of the scene and a private area within the scene defined as a privacy zone, wherein the private area in the non-private video stream is a non-viewable area in the non-private video stream. The implementations further include obtaining a private video stream corresponding to the non-private video stream, wherein the private video stream comprises an encrypted version of the private area of the privacy zone. Additionally, the implementations further include transmitting a multi-track format video comprising the non-private video stream and the private video stream.

## Description

This application claims the benefit of U.S. Provisional Application Serial No. 63/778,267, entitled "SYSTEMS AND METHODS FOR IMPLEMENTING ENCRYPTED PRIVACY ZONES" and filed on March 26, 2025, the disclosure of which is incorporated by reference herein in its entirety.

The described aspects relate to video recording systems, and more particularly, to implementing a non-private area of a scene and a private area within a scene defined as a privacy zone in video streams.

Aspects of the present disclosure relate generally to video recording systems, and more particularly, to implementing privacy zones in portions of a scene.

In security systems, such as but not limited to closed-circuit television (CCTV) systems, privacy zones are implemented directly on cameras to prevent sensitive content from ever being recorded, transmitted, or stored. While this ensures privacy, the privacy zones also result in the loss of one or more portions of an image.

Thus, improvements in current video recording systems are desired.

The following presents a simplified summary of one or more aspects in order to provide a basic understanding of such aspects. This summary is not an extensive overview of all contemplated aspects and is intended to neither identify key or critical elements of all aspects nor delineate the scope of any or all aspects. Its sole purpose is to present some concepts of one or more aspects in a simplified form as a prelude to the more detailed description that is presented later. Embodiments according to the invention are disclosed in particular in the appended claims.

An example aspect includes a method of recording one or more images, comprising obtaining a non-private (e.g., public) video stream of a scene captured by a camera, wherein the non-private video stream comprises a non-private area of the scene and a private area within the scene defined as a privacy zone, wherein the private area in the non-private video stream is a non-viewable area in the non-private video stream. The method further includes obtaining a private video stream corresponding to the non-private video stream, wherein the private video stream comprises an encrypted version of the private area of the privacy zone. Additionally, the method further includes transmitting a multi-track format video comprising the non-private video stream and the private video stream.

Another example aspect includes an apparatus for recording one or more images, comprising one or more memories and one or more processors coupled with one or more memories and configured to perform, individually or in any combination, the following actions. The one or more processors are configured to obtain a non-private video stream of a scene captured by a camera, wherein the non-private video stream comprises a non-private area of the scene and a private area within the scene defined as a privacy zone, wherein the private area in the non-private video stream is a non-viewable area in the non-private video stream. The one or more processors are further configured to obtain a private video stream corresponding to the non-private video stream, wherein the private video stream comprises an encrypted version of the private area of the privacy zone. Additionally, the one or more processors are further configured to transmit a multi-track format video comprising the non-private video stream and the private video stream.

Another example aspect includes an apparatus for recording one or more images, comprising means for obtaining a non-private video stream of a scene captured by a camera, wherein the non-private video stream comprises a non-private area of the scene and a private area within the scene defined as a privacy zone, wherein the private area in the non-private video stream is a non-viewable area in the non-private video stream. The apparatus further includes means for obtaining a private video stream corresponding to the non-private video stream, wherein the private video stream comprises an encrypted version of the private area of the privacy zone. Additionally, the apparatus further includes means for transmitting a multi-track format video comprising the non-private video stream and the private video stream.

Another example aspect includes a computer-readable medium having instructions stored thereon of recording one or more images, wherein the instructions are executable by one or more processors, individually or in any combination, to obtain a non-private video stream of a scene captured by a camera, wherein the non-private video stream comprises a non-private area of the scene and a private area within the scene defined as a privacy zone, wherein the private area in the non-private video stream is a non-viewable area in the non-private video stream. The instructions are further executable to obtain a private video stream corresponding to the non-private video stream, wherein the private video stream comprises an encrypted version of the private area of the privacy zone. Additionally, the instructions are further executable to transmit a multi-track format video comprising the non-private video stream and the private video stream.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The accompanying drawings, which are incorporated into and constitute a part of this specification, illustrate one or more example aspects of the present disclosure and, together with the detailed description, serve to explain their principles and implementations.
Fig. 1 is a schematic diagram of an example of a privacy zone configuration system, in accordance with example aspects of the present disclosure.
Fig. 2 is a block diagram of a process to record one or more images with privacy zones, in accordance with example aspects of the present disclosure.
Fig. 3 is a block diagram of an example of a computer device having components configured to perform a method of video encoding, in accordance with example aspects of the present disclosure.
Fig. 4 is a flowchart of an example of a method of video encoding, in accordance with example aspects of the present disclosure.
Fig. 5 is a flowchart of an example of a method of video encoding, in accordance with example aspects of the present disclosure.
Fig. 6 is a flowchart of an example of a method of video encoding, in accordance with example aspects of the present disclosure.
Fig. 7 is a flowchart of an example of a method of video encoding, in accordance with example aspects of the present disclosure.
Fig. 8 is a flowchart of an example of a method of video encoding, in accordance with example aspects of the present disclosure.
Fig. 9 is a flowchart of an example of a method of video encoding, in accordance with example aspects of the present disclosure.
Fig. 10 is a flowchart of an example of a method of video encoding, in accordance with example aspects of the present disclosure.

### DETAILED DESCRIPTION

Various aspects are now described with reference to the drawings. In the following description, for purposes of explanation, numerous specific details are set forth in order to provide a thorough understanding of one or more aspects. It may be evident, however, that such aspect(s) may be practiced without these specific details.

For purposes of this disclosure, the following terms have the meanings set forth below. These definitions apply unless the context clearly indicates otherwise.

"Privacy zone" means a portion of a video frame corresponding to a region of interest (ROI) identified for privacy protection. A privacy zone may be defined by one or more of: (i) pixel coordinates; (ii) a bounding box; (iii) a polygon set; (iv) a freeform outline; (v) a pixel mask; (vi) a segmentation output; (vii) an object track identifier, and/or (viii) any other representation, data structure, or technique for identifying, delineating, or tracking a region within the video frame. A privacy zone may be static across frames or dynamic across frames.

"Non-viewable area" means a portion of a frame rendered unusable for visual interpretation without authorization. A non-viewable area may be produced by at least one of: (i) redaction (e.g., setting pixels to a constant value); (ii) blurring or pixelation; (iii) replacement with a solid color or pattern; (iv) encrypted pixel data; (v) removal and replacement with placeholder values, where the original visual content is not recoverable from the non-private track alone and/or (vi) any other transformation, obfuscation, masking, filtering, or processing operation that renders the underlying visual content non-interpretable without authorization.

"Non-private video stream" means a video stream including at least a non-private area of a scene and including a privacy zone represented as a non-viewable area. The non-private video stream is decodable and viewable by default video playback/processing systems that do not possess a decryption key for the private content.

"Private video stream" means a video stream associated with the non-private video stream that includes protected visual content corresponding to at least the privacy zone. In some implementations, the private video stream includes only privacy-zone pixels (and optionally an alpha mask and/or metadata) rather than the full frame.

"Encrypted version" means data produced by transforming at least a portion of a frame using one or more cryptographic techniques such that the transformed data cannot be feasibly reconstructed into the original visual content without possession of at least one cryptographic key. The encrypted version may be (i) encryption of pixel data; (ii) encryption of compressed-domain elements (e.g., transform coefficients); (iii) encryption of a byte stream portion corresponding to the privacy zone; and/or (iv) obfuscation, data masking, or tokenization where the original pixel values are replaced by pointers to a secure vault.

"Multi-track format" means a containerized representation that carries two or more synchronized tracks associated with a common timeline, including at least (i) the non-private video stream track comprising the non-private video stream and (ii) the private video stream track comprising the private video stream. A multi-track format may include one or more metadata tracks and/or one or more auxiliary tracks (e.g., alpha mask tracks). Non-limiting examples include MKV and ISO Base Media File Format (ISOBMFF) derived containers.

"Corresponding frames" means frames in different tracks that share a common time association, such as matching timestamps, matching frame indices, and/or an explicit mapping table, even when one track is stored at a different resolution, includes only ROIs, or is variable-frame-rate.

"Authorization" / "privilege" means a policy decision that permits access to decrypt and render private content captured in the private video stream. Authorization may be based on credentials, roles, device identity, a secure element, an entitlement token, and/or cryptographic proof.

In certain video streams, specific sections of the scene may be encoded to protect privacy, such as in private, confidential, and/or sensitive areas of an image. For example, in a security system, cameras monitoring a scene containing automated teller machines (ATMs) or scene such as hospital rooms, or private residences may capture information that may be designated as a privacy zone so that the corresponding portion of the image is not visible to most viewers. In another example, a security camera monitoring an electronic door lock for a house, apartment, or building entrance may capture a keypad used for entering an access code, and the region of the image corresponding to the keypad may be designated as a privacy zone to prevent disclosure of the entered access code. Examples of a privacy zone may include, but are not limited to, an area of an image having private, confidential, and/or sensitive information, such as personal identification number (PIN) entries, faces, personal identification documents, or secure/restricted locations. Accordingly, a special encoding may be applied to obscure these areas to anyone except persons with proper permissions. In addition, this type of encoding may also help comply with privacy regulations and ethical considerations while still allowing surveillance for security purposes. The encoding of the privacy zone may be referred to herein additionally as encrypting or redacting but includes any type of encoding that prevents the privacy zone from being viewed in an image unless the user has an authorization or privilege associated with being able to access the privacy zone.

In a first aspect, the present disclosure describes recording one or more images by obtaining a non-private video stream of a scene containing a private area (e.g., privacy zone) corresponding to a non-viewable area in the non-private video stream and obtaining a private video stream of the scene that contains an encrypted version of the private area. In a second aspect, the present disclosure describes modifying the privacy zones along a chain of devices rather than only at the camera. In a third aspect, the present disclosure describes applying privacy encoding to moving objects within the scene.

The technical benefits of the present disclosure include at least protecting sensitive areas in one or more of a plurality of frames of a video of a scene by specially encoding, such as encrypting, privacy zones instead of permanently removing such privacy zones. Further, by utilizing multiplexed video streams (e.g., such as Matroska Video Container (MKV) format), the present disclosure ensures that encrypted and non-encrypted content can be stored and transmitted together. This allows users with a proper privilege to have access to decryption keys to enable viewing the full scene, including one or more privacy zones corresponding to their privilege, while maintaining privacy for standard users, e.g., users without a privilege to view a privacy zone. In addition, this approach may enable multiple levels of privacy for different areas of a scene, offering greater flexibility compared to traditional privacy zones. In addition, the risk of privacy breaches is reduced due to avoiding reliance on downstream permissions enforcement, which can be vulnerable to security lapses.

In addition, the present disclosure also extends privacy zone implementation beyond the camera, allowing modifications to be applied at different points in the video processing chain. Unlike some methods where privacy zones are only set at a camera at the time of recording, the present disclosure enables additional privacy layers to be added at downstream devices, such as Network Video Recorders (NVRs) and/or any other device storing or transporting the video. This flexibility allows for privacy zone enhancement even when the original video source does not support encrypted privacy zones. By avoiding the need for multiple video streams, the present disclosure mitigates the risk of unfiltered frames of the video being accessed without proper controls.

Furthermore, the present disclosure also introduces adaptive privacy zones that adjust per frame rather than remaining static. This is particularly useful for protecting the privacy of a moving privacy zone, such as may be associated with a moving object, and/or for Pan-Tilt-Zone (PTZ) cameras, where the position of private zones shifts as the position and/or orientation of the camera moves. Additionally, in examples of a moving object, the present disclosure may allow for encoding of moving objects such as license plates or individuals crossing the camera's field of view, ensuring privacy is maintained dynamically. As described above, privacy encoding can be implemented either at the camera level using edge analytics or at a downstream device with more advanced processing capabilities.

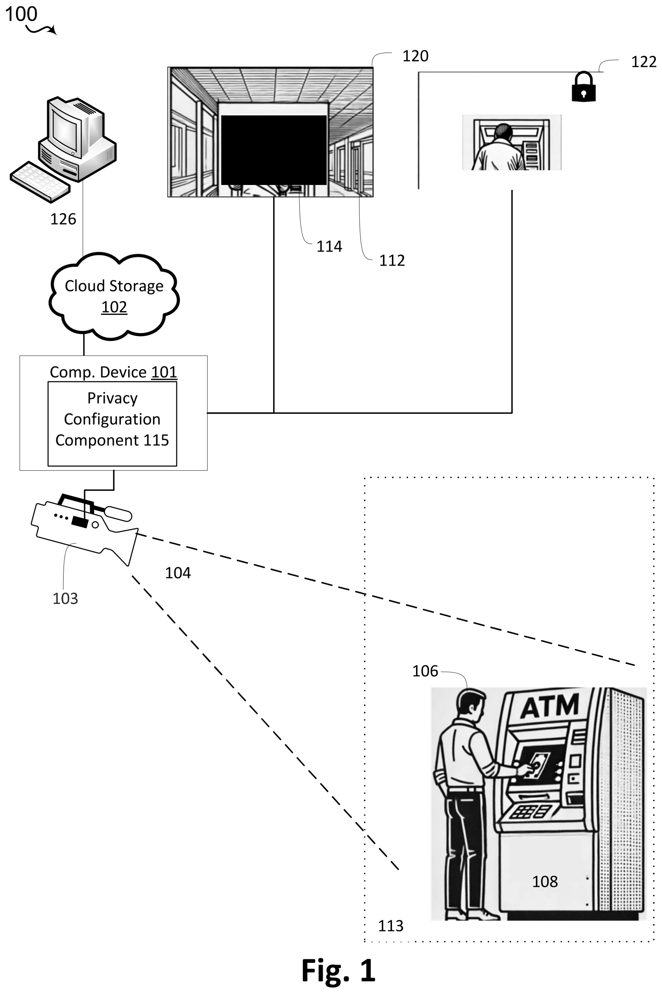

Referring to FIG. 1, one example of a privacy zone configuration system 100 includes a system that has a privacy configuration component 115 for generating a non-private video stream and a separate private video stream of a scene captured by a camera and transmitting a multi-track format video comprising the non-private video stream and the private video stream.

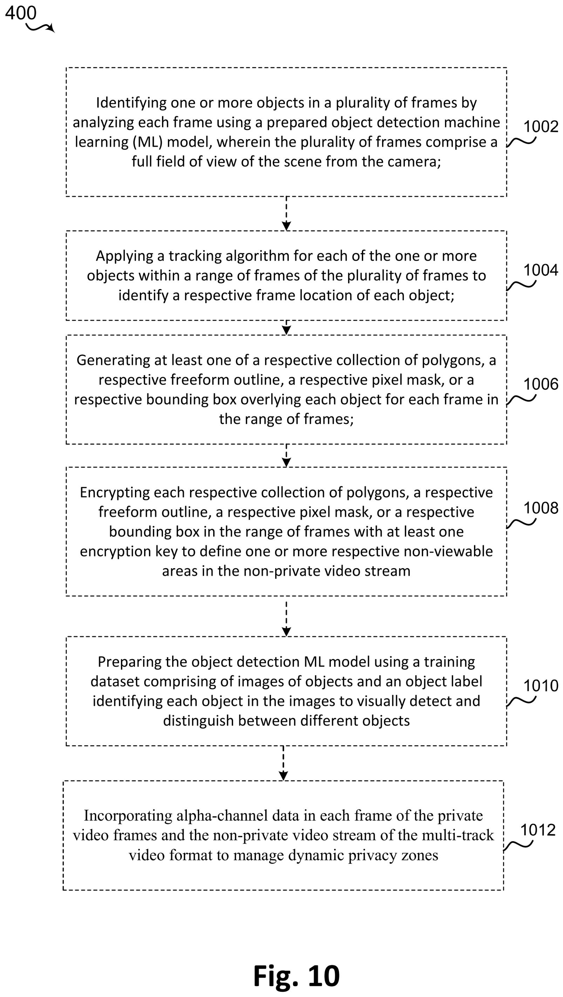

For example, a computer device 101 may implement the privacy configuration component 115, which is configured to capture, by a camera 103 coupled to the computer device 101, one or more frames of a scene 113, such as, but not limited to, a bank with an ATM 108. Specifically, the camera 103 (or image sensor) is positioned such that the field of view 104 includes the ATM 108 in each video frame. As an example, the scene 113 may contain some sensitive areas that should not be visible to all users. For example, the field of view 104 of the camera 103 may capture scenes in front of an ATM 108 that should be blocked or blurred to protect privacy and sensitive information exposure, for example, so that a customer's PINs are not recorded by the camera 103. In some aspects, other potential private areas to obscure may include an ATM screen that displays sensitive banking information such as account balances for a person 106, PIN entry, or transaction details; a keypad area to prevent PIN theft; a bank card slot to block numbers or bank details on the card; or user's face and identifiable features to protect customer identity and privacy. In some aspects, as will be described in more detail in FIG. 10, the private area to obscure may involve blocking dynamic objects that pass through the scene such as a car license plate on a vehicle or a face on a person 106 moving through the scene 113.

As shown in a non-private video stream 120 captured by the camera 103, the camera 103 or downstream device may identify the private areas to obscure as a privacy zone such that the private area 114 (e.g., a view of the user interface area of the ATM 108) is a non-viewable area (e.g., redacted or blurred or encrypted) in the non-private video stream 120 and a non-private area 112 may be viewed by anyone. In this way, the camera 103 and/or computing device 101 may generate a non-private video stream with a non-private area 112 of the scene and a non-viewable private area 114 (e.g., redacted as black for privacy reasons), and, in addition, a private video stream 122 that contains an encrypted version of the private area 114 of the privacy zone for users with authorized access to the private video stream 122. In an implementation, for example, the private video stream 122 includes only the encrypted version of the private area 114 of the privacy zone.

In some aspects, the computer device 101 may be connected to a cloud storage 102, e.g., one or more remote servers, that can store video streams from the camera 103. For instance, the camera 103 can transmit one or more recorded video streams to the remote servers for secure and scalable storage or further downstream processing. In some implementations, where the computer device 101 and the privacy configuration component 115 are implemented together in the camera 103, the camera 103 associated with the computer device 101 processes and encodes the video frames locally before uploading the video frames to the cloud storage 102 in near real-time or at scheduled intervals, depending on network conditions and storage preferences. In other implementations, the camera 103 and/or the computer device 101 may transmit the video stream to a downstream device 126, which may include the computer device 101 and/or the privacy configuration component 115, and the initial encoding and/or additional encoding may be performed in the downstream device locally or after being uploaded to the cloud storage 102.

Cloud storage 102 enables automatic backups, ensuring that video streams are protected from local hardware failures, theft, or tampering. Additionally, cloud-based storage 102 allows for remote access, enabling users to retrieve, review, and manage footage from any device with internet connectivity. Advanced cloud storage 102 or cloud-based processing can also support AI-driven features such as object detection, facial recognition, and event-based recording, optimizing storage by prioritizing selective footage while reducing unnecessary data uploads. Security measures, including encryption and access controls, help safeguard the videos against unauthorized access.

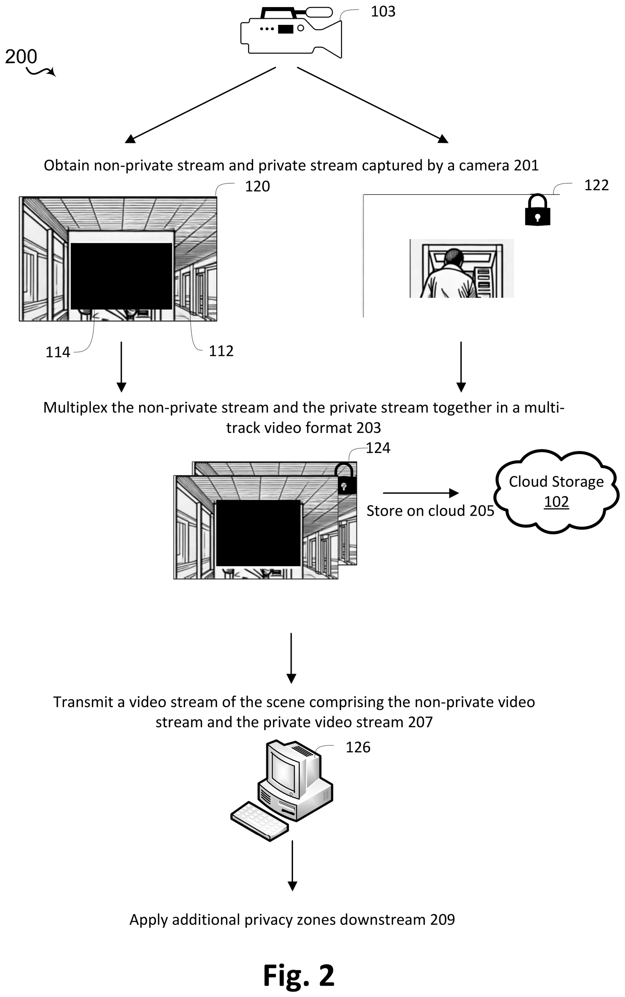

Referring to FIG. 2, one example of a process 200 implemented by the system 100 of FIG. 1 includes obtaining a non-private stream and a private stream, multiplexing the non-private stream and the private stream together in a multi-track video format, transmitting a video stream of the scene comprising the non-private stream and the private video stream, and, optionally, applying additional privacy zones downstream.

In some implementations, the process 200 illustrates the privacy zone configuration system 100 or a component thereof (e.g., privacy configuration component 115 shown in FIG. 2) obtaining a non-private video stream of a scene with at least one private area annotated (e.g., redacted or blurred or encrypted) to be a non-viewable area and a private video stream with an encrypted version of the private area of the privacy zone. Here, a camera 103 captures a scene (e.g., the scene 113 of a bank with an ATM 108 shown in FIG. 1) containing at least one part of the scene that is considered sensitive.

In some implementations, the process 200 proceeds to obtain 201 at least one non-private stream and at least one private stream captured by the camera 103. As shown in FIG. 2, the process 200 may include obtaining a non-private stream comprising a non-private area 112 of the scene and a private area 114 within the scene defined as a privacy zone (e.g., redacted or blurred or encrypted) and obtaining a private video stream comprising an encrypted version of the private area 114 of the privacy zone.

In some implementations, the process 200 proceeds to multiplex 203 the non-private video stream 120 and the private video stream 122 in a multi-track video format file 124. This allows both the non-private video stream 120 and the private video stream 122 to be packaged together while remaining distinct, enabling selective access to different content streams. The benefit of this approach is enhanced flexibility and security in video streaming systems for providing a public or private video stream based on access permissions, which reduces the need for redundant video files and improving storage efficiency. In addition, the multi-track video format file 124 supports dynamic content control such as enabling private streams only for authorized users without affecting the overall video experience.

In some implementations, synchronization between the non-private and private tracks is achieved using a combination of temporal timestamps and frame-accurate metadata descriptors. For example, each non-private frame may include a presentation timestamp (PTS) and/or decoding timestamp (DTS), while each private payload corresponding to that frame includes a non-temporal sequence identifier or a unique frame-hash mapping. This mapping ensures a persistent link between a specific region of interest (ROI) in the private track and a specific set of macroblocks or coordinate-aligned pixels in the non-private track, even in the presence of network jitter, packet reordering, or variable frame rate (VFR) offsets. By utilizing these explicit metadata descriptors, the system maintains deterministic alignment without relying solely on a common clock, thereby preventing synchronization drift during high-latency transmissions.

In some implementations, the multi-track format includes a mapping table that associates (i) a non-private frame identifier (timestamp, frame index, or sequence number) with (ii) one or more privacy-zone payload identifiers. This supports embodiments where the private track is sparse (e.g., only includes frames where an object is present) and still allows deterministic reconstruction.

Where the private track includes ROI tiles rather than full frames, the system stores placement data (e.g., horizontal (x) and vertical (y) offset, width/height, polygon vertices, mask references) that indicates where the decrypted ROI is composited into the non-private frame. Placement metadata may be per-frame, per-object-track, or delta-coded across frames.

In some implementations, the system periodically inserts resynchronization markers (e.g., keyframes with full placement state) and/or uses monotonic counters to detect loss or reordering. On mismatch, the playback system may suppress private overlay until re-synchronization, preventing accidental mis-overlay of private content onto the wrong frame.

In some implementations, the process 200 proceeds to store 205 the multi-track video format onto a cloud storage 102 ensuring secure and scalable access to both the non-private video stream 120 and private video stream 122. By leveraging cloud storage 102, the system enables seamless content distribution, allowing authorized users to access video streams from any location without the need for local storage. Additionally, cloud-based storage supports efficient content management, enabling adaptive streaming, permission-based access control, and optimized bandwidth usage for a smoother viewing experience.

In some implementations, encryption keys used for the private track are managed using a key hierarchy. For example, a device master key (stored in a secure element or trusted execution environment) protects one or more content keys used to encrypt privacy-zone payloads.

In some implementations, a content key is assigned per recording session, per time interval, per segment, and/or per privacy zone. Key rotation may occur periodically (e.g., per N frames or per segment duration) to reduce exposure in the event of compromise.

Authorized playback may require an entitlement token, certificate, or authenticated session established with a key server. Upon authorization, a key server may provide a wrapped content key to the playback device. The wrapped content key may be unwrapped only within a trusted environment, and the private track payload may be decrypted only when authorization is valid.

In some implementations, access to private content is logged, and keys or entitlements may be revoked. Revocation may be implemented by ceasing distribution of new content keys, using short-lived licenses, and/or using per-segment keys such that future segments become inaccessible without renewed authorization.

In some implementations, the system utilizes a multi-layered key hierarchy to provide tiered access to different categories of sensitive data within the private video stream. Under this hierarchical model, a plurality of encryption keys (e.g., Key A, Key B, ... Key N) are associated with different privacy-level classifications or specific regions of interest (ROIs). For example, a first cryptographic key may be assigned to a first privacy layer (e.g., facial redaction), while a second, distinct cryptographic key is assigned to a second, higher-sensitivity privacy layer (e.g., a PIN entry keypad or financial document). This allows for role-based decryption, wherein a first authorized user (e.g., a general security guard) possesses credentials to decrypt only the first privacy layer, while a second authorized user (e.g., a forensic investigator) possesses credentials to decrypt both the first and second privacy layers. By segregating private content into these discrete, key-dependent layers, the system enables granular permissioning and ensures that sensitive information is only accessible to users with a corresponding authorization level, enhancing both regulatory compliance and enterprise data security.

In some implementations, the process 200 proceeds to transmit 207 a video stream of the scene comprising the non-private video stream 120 and the private video stream 122 to a downstream device 126. The benefit of this approach is near real-time or on-demand viewing with selective access (i.e., public viewers can watch the non-private content, while authorized users can access the private stream without requiring separate transmissions). This improves bandwidth efficiency, reduces latency, and ensures a seamless viewing experience across different user access levels.

In some implementations, the process 200 may proceed to apply 209 additional privacy layers by a downstream device. This means that after an initial layer of implementing an initial privacy zone, another downstream device 126 in the data flow can reinforce additional privacy protections by adding further encryption, tokenization, or differential privacy measures.

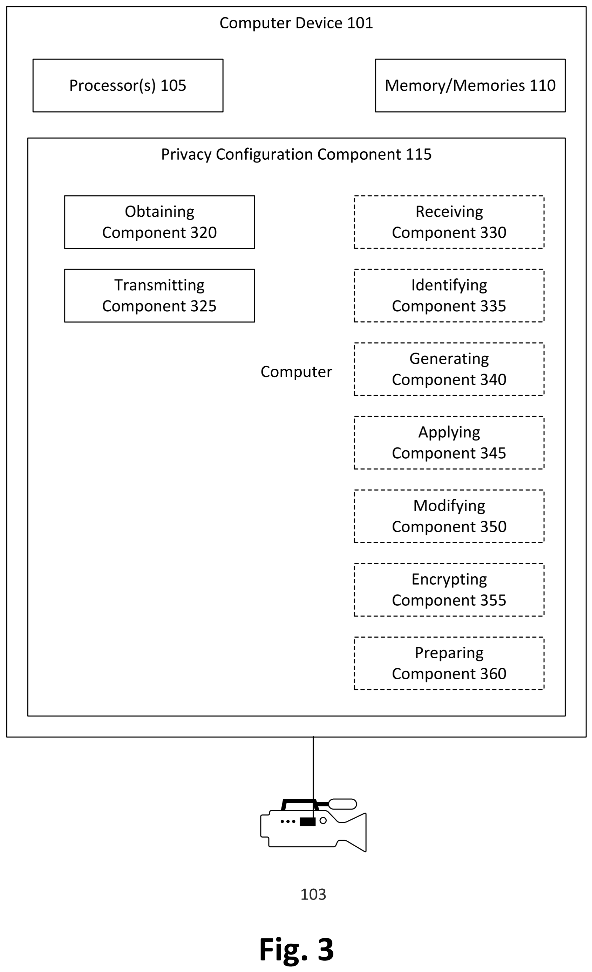

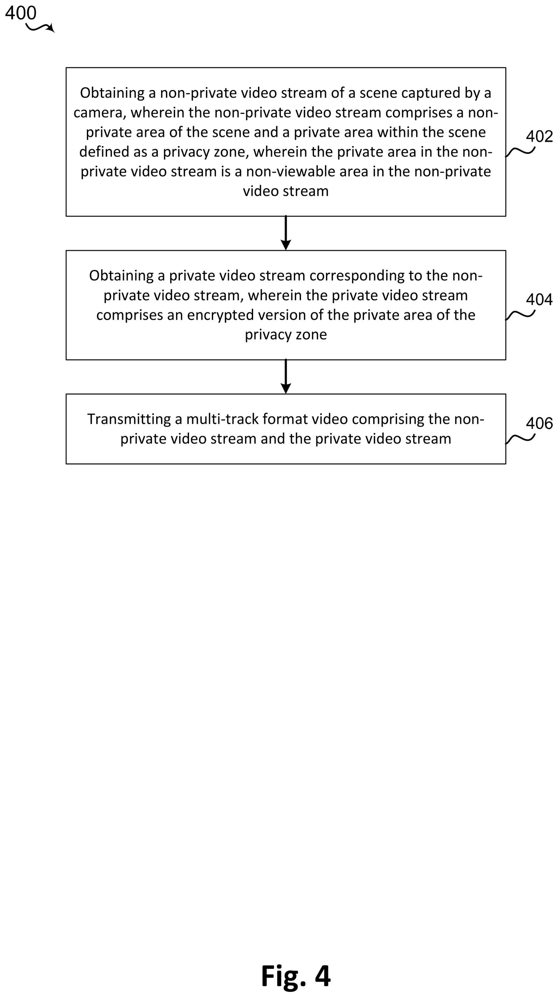

Referring to Fig. 3 and Fig. 4, in operation, computer device 101 may perform a method 400 of recording one or more images, such as via execution of privacy configuration component 115 by one or more processors 105 configured, individually or in any combination, to execute instructions to perform the following actions, and/or configured to communicate with one or more memories 110 to obtain and execute the instructions.

At block 402, the method 400 includes obtaining a non-private video stream of a scene captured by a camera, wherein the non-private video stream comprises a non-private area of the scene and a private area within the scene defined as a privacy zone, wherein the private area in the non-private video stream is a non-viewable area in the non-private video stream. For example, in an aspect, computer device 101, one or more processors 105, one or more memories 110, privacy configuration component 115, and/or obtaining component 320 may be configured to or may comprise means for obtaining a non-private video stream of a scene captured by a camera, wherein the non-private video stream comprises a non-private area of the scene and a private area within the scene defined as a privacy zone, wherein the private area in the non-private video stream is a non-viewable area in the non-private video stream.

For example, the obtaining at block 402 may include obtaining a non-private video stream from a camera 103 that captures a scene 113 containing both a non-private area and a designated private area, known as a privacy zone. As an input, the camera 103 records the scene, and a privacy filter or masking algorithm or encryption algorithm is applied to define and obscure the private area within the non-private video stream. This can be achieved through pixelation, blurring, blacking out, or near real-time region segmentation using computer vision techniques. The function ensures that the private area remains a non-viewable region in the final output, allowing the video stream to be shared publicly while protecting sensitive information.

At block 404, the method 400 includes obtaining a private video stream corresponding to the non-private video stream, wherein the private video stream comprises an encrypted version of the private area of the privacy zone. For example, in an aspect, computer device 101, one or more processors 105, one or more memories 110, privacy configuration component 115, and/or obtaining component 320 may be configured to or may comprise means for obtaining a private video stream corresponding to the non-private video stream, wherein the private video stream comprises an encrypted version of the private area of the privacy zone.

In some implementations, the privacy zone is protected while maintaining compliance with a video codec and/or container format. For example, the system may preserve a standards-compliant non-private track by ensuring that the non-private track contains valid pixel values for the privacy zone region (e.g., redacted pixels), while the private track carries a protected representation of the privacy zone content.

In one implementation, the private track stores only privacy-zone pixel values (e.g., cropped ROI tiles) for each frame, optionally accompanied by an alpha mask indicating placement within the non-private frame. The ROI tiles may be encrypted prior to encoding or after encoding, and the resulting encrypted bytes are stored as a private track payload. The non-private track remains a conventional decodable video with the privacy zone replaced by a non-viewable area.

In another implementation, the private area is protected in the compressed domain by encrypting selected syntax elements or transform-domain values associated with blocks overlapping the privacy zone (e.g., transform coefficients or residuals), while preserving enough header and structural elements to maintain decoder operation. The encrypted elements may be stored in the private track and inserted during authorized playback to reconstruct the original appearance.

To reduce visual leakage at boundaries, the system may align privacy-zone boundaries to codec block structures (e.g., macroblocks/CTUs) or may expand the privacy zone by a margin to cover partial blocks. The system may additionally apply in-loop filtering behavior control (or a boundary padding rule) to prevent adjacent non-private pixels from revealing private content through prediction.

In some implementations, the private track is encoded as an independently decodable stream (e.g., intra-only) so that private content can be decrypted and rendered without requiring the full original unredacted stream. In other implementations, the private track is encoded as ROI difference data relative to the redacted region.

For example, the obtaining at block 404 may include obtaining a private video stream that corresponds to the non-private video stream, where the private video stream contains an encrypted version of the private area within the defined privacy zone. As input, the camera 103 captures the scene, including both non-private and private areas. In some aspects, the private area may be manually configured by a user to set coordinates in the video frame as a private area. In some aspects, a selective encryption algorithm may be applied to the private area, securing the contents of the area while allowing controlled access. Common encryption methods such as AES (Advanced Encryption Standard) or RSA (Rivest-Shamir-Adleman) can be used to ensure strong security. The output is a protected private video stream that can only be accessed by authorized users with the correct decryption keys.

At block 406, the method 400 includes transmitting a multi-track format video comprising the non-private video stream and the private video stream. For example, in an aspect, computer device 101, one or more processors 105, one or more memories 110, privacy configuration component 115, and/or transmitting component 325 may be configured to or may comprise means for transmitting a multi-track format video comprising the non-private video stream and the private video stream.

For example, the transmitting at block 406 may include transmitting a multi-track format video that includes both the non-private video stream and the private video stream as separate tracks within a single file or stream. As input, the non-private video stream 120 and encrypted private video streams 122 are combined using a multiplexing algorithm, such as MPEG-4 Part 14 (MP4) or MKV container formats, which allow multiple video tracks to coexist within one file. During transmission, adaptive streaming protocols like HTTP Live Streaming (HLS) or Dynamic Adaptive Streaming over HTTP (DASH) may be used to optimize delivery based on network conditions and user access permissions. The output is a structured video stream where general viewers can access the non-private content, while authorized users with decryption keys can unlock the private track. This approach enhances security, reduces redundancy in video storage, and ensures efficient bandwidth usage by delivering a single, versatile video file instead of separate streams.

In this way, the method 400 describes a video privacy solution that integrates near real-time privacy filtering, encryption, and multi-track video transmission. Unlike conventional methods that permanently obscure and/or delete private areas, this system preserves sensitive information by generating a non-private stream with masked regions and a private stream containing encrypted content accessible only to authorized users. Using robust encryption techniques like AES or RSA, the private data remains secure while maintaining flexibility for controlled access. The multi-track format, supported by container formats like MP4 or MKV, optimizes bandwidth and storage efficiency by consolidating both streams into a single file. Additionally, adaptive streaming protocols such as HLS or DASH enhance delivery by adjusting video quality based on network conditions and user permissions. By allowing customizable privacy zones and near real-time privacy masking through pixelation, blurring, or segmentation, the system ensures privacy without compromising usability. This approach effectively balances security, efficiency, and accessibility, making the disclosed video privacy solution more advanced than conventional video privacy solutions.

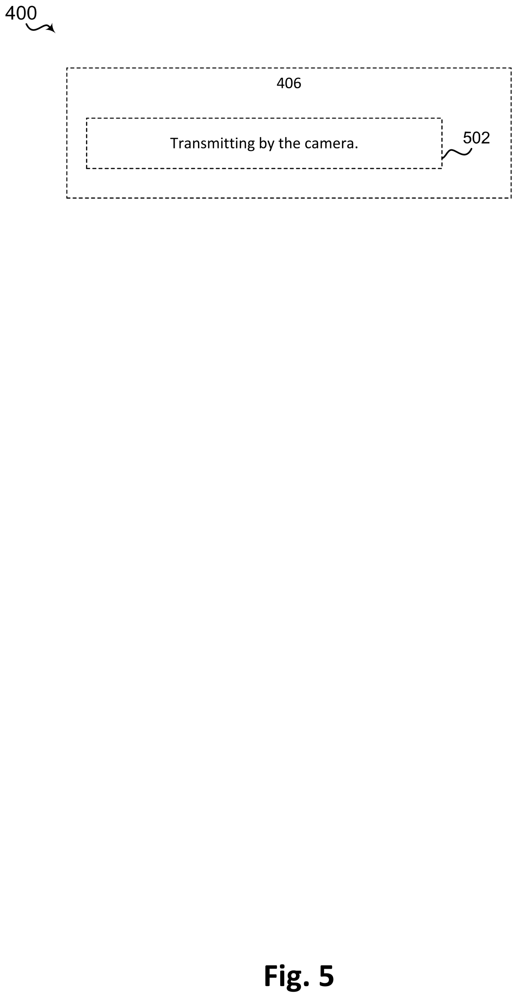

Referring to Fig. 5, in an alternative or additional aspect, at block 502, the transmitting at block 406 of the multi-track format video further comprises transmitting by the camera 103.

For example, this process involves the camera 103 itself, e.g., instead of a downstream device, transmitting the multi-track format video, which includes both the non-private and private video streams. As input, the camera captures the full scene, processes the full scene in near real-time to define the privacy zone, and applies encryption to the private area. The camera directly transmits this structured video using streaming protocols such as RTSP (Real-Time Streaming Protocol) or Web Real-Time Communication (WebRTC) for low-latency delivery, or HLS/DASH for adaptive streaming. The output is a secure, multi-track video stream sent directly from the camera to cloud storage, a media server, or end-user devices.

Having the camera directly perform encryption at the source offers several advantages. First, encrypting the private video stream 122 directly within the camera 103 ensures that sensitive data is protected before the private video stream 122 leaves the device, minimizing the risk of interception or tampering during transmission. In addition, since encryption is handled at the camera level, there is no need for additional processing by external servers or storage systems, leading to improved system efficiency and lower infrastructure costs. Second, encryption at the source also ensures that even if the video stream is intercepted during transmission, unauthorized users cannot access the private areas without the proper decryption keys. Third, by encrypting video in near real-time at the camera 103, there is no need for additional processing delays at later stages, enabling faster and more efficient video delivery. Thus, since encryption is applied before transmission, the encryption becomes much harder for attackers to alter or manipulate private video content without detection.

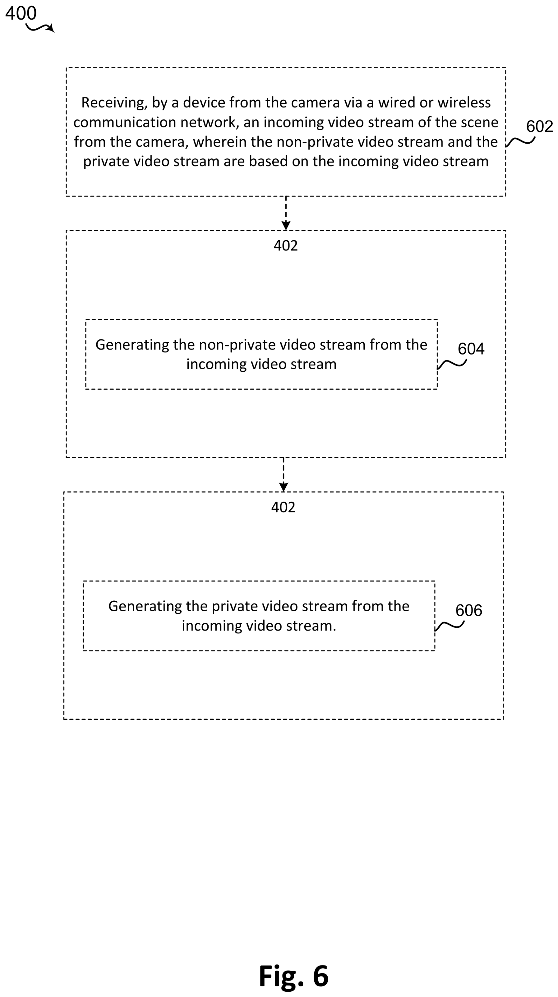

Referring to Fig. 6, in an alternative or additional aspect, at block 602, the method 400 may further include receiving, by a device from the camera via a wired or wireless communication network, an incoming video stream of the scene from the camera, wherein the non-private video stream and the private video stream are based on the incoming video stream. For example, in an aspect, computer device 101, one or more processors 105, one or more memories 110, privacy configuration component 115, and/or receiving component 330 may be configured to or may comprise means for receiving, by a device from the camera via a wired or wireless communication network, an incoming video stream of the scene from the camera, wherein the non-private video stream and the private video stream are based on the incoming video stream.

For example, the receiving at block 602 may include receiving the incoming video stream of the scene from the camera by the downstream device 126, where the video may or may not include an encrypted private stream. In one case, for example, as an input, the camera 103 captures the full scene and transmits the full video stream. For instance, the camera transmits this stream over a network using protocols such as Real-Time Streaming Protocol (RTSP), WebRTC, or HLS for efficient streaming. The receiving downstream device extracts and processes the incoming video, applying encryption to the private area(s) and multiplexing the combined streams. In this way, the downstream device allows access to the non-private stream by default while restricting the private stream to authorized users with decryption keys.

In an alternative or additional aspect, the incoming video stream comprises both the non-private video stream and the private video stream. In this example, the downstream device may be configured to apply additional encryption to one or more additional privacy areas or zones.

In this optional aspect, at block 604, the obtaining at block 402 of the non-private video stream further comprises generating the non-private video stream from the incoming video stream.

For example, generating the non-private video stream from the incoming video stream may involve receiving an incoming video stream as input, which may contain private or sensitive content. In some aspects, a processing algorithm (such as object detection, face blurring, pixelation, or content redaction) may be applied to identify and obfuscate private elements while preserving the overall usability of the footage. The output is a non-private video stream that retains relevant visual information but removes or obscures sensitive data. This approach ensures privacy compliance, protects personal data, and enables safe video sharing and analysis without exposing confidential information.

In this optional aspect, at block 606, the obtaining at block 402 of the private video stream further comprises generating the private video stream from the incoming video stream. In this case, the incoming video stream has no privacy so a private video stream may be generated at a downstream device 126.

For example, generating the private video stream from the incoming video stream may involve receiving an incoming video stream as input and processing the private video stream to extract or highlight private or sensitive content. This may also involve object recognition, facial detection, metadata extraction, or encryption algorithms to identify and preserve elements such as faces, license plates, or other confidential details. The output is a private video stream that retains all sensitive information for authorized access while enabling secure storage or transmission. This approach ensures data integrity, controlled access, and compliance with privacy regulations.

In an alternative or additional aspect, the non-private video stream and the private video stream each comprise a plurality of corresponding frames, wherein the private area within the scene has a first relative frame location within a first frame of the plurality of corresponding frames and a second relative frame location within a second frame of the plurality of corresponding frames, wherein the second relative frame location is different from the first relative frame location.

For example, this process involves generating both a non-private video stream and a private video stream, each containing a set of frames derived from an incoming video stream. The non-private video stream typically retains all frames, but with privacy-sensitive areas redacted, whereas the private video stream may include only a subset of frames, particularly those containing private areas, and, in some aspects, these frames may not be consecutive (e.g., if a "private area" enters and exits the scene).

A frame correspondence mechanism may be utilized to ensure that at least some frames in both streams align, even if the private stream has fewer frames. The private area's location within a scene may also change across frames due to motion, object tracking, or camera movement. In some aspects, a tracking algorithm (such as optical flow, collection of polygons, freeform outline, pixel mask, bounding box tracking, or deep learning-based object detection) may determine the first relative frame location of the private area in an initial frame and updates the position of the private area in subsequent frames, where the second relative frame location is different from the first due to movement of the tracked object.

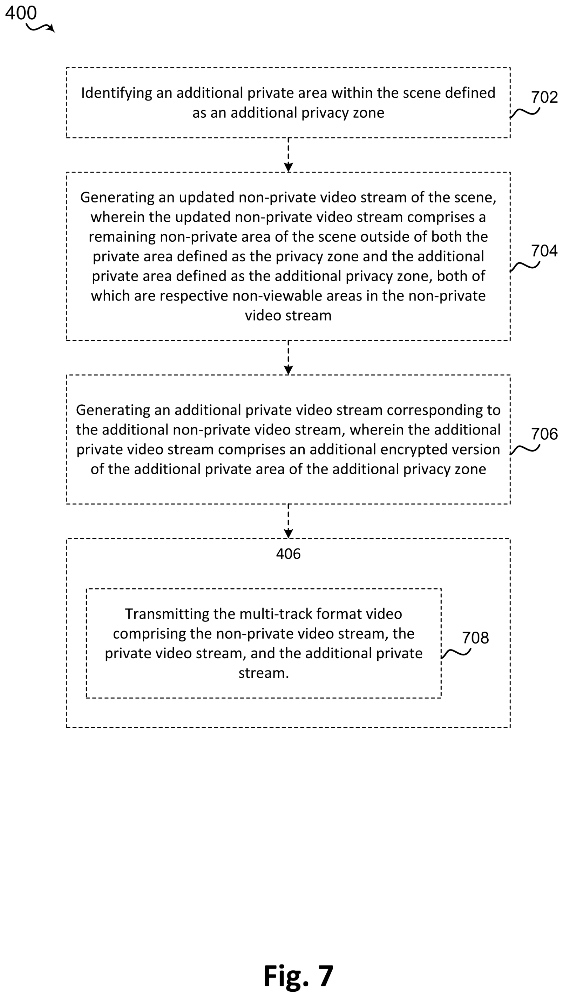

Referring to Fig. 7, in an alternative or additional aspect, at block 702, the method 400 may further include identifying an additional private area within the scene defined as an additional privacy zone. For example, in an aspect, computer device 101, downstream device 126, one or more processors 105, one or more memories 110, privacy configuration component 115, and/or identifying component 335 may be configured to or may comprise means for identifying an additional private area within the scene defined as an additional privacy zone.

For example, the identifying at block 702 may include the downstream device 126 analyzing an incoming video stream to detect and classify new areas requiring privacy protection. This may be achieved using computer vision algorithms, such as object detection, facial recognition, motion tracking, or predefined region mapping, to identify elements like people, sensitive objects, or restricted zones. Once detected, the system dynamically designates an additional privacy zone, marking the additional privacy zone for redaction, blurring, or selective access.

In this optional aspect, at block 704, the method 400 may further include generating an updated non-private video stream of the scene, wherein the updated non-private video stream comprises a remaining non-private area of the scene outside of both the private area defined as the privacy zone and the additional private area defined as the additional privacy zone, both of which are respective non-viewable areas in the non-private video stream. For example, in an aspect, computer device 101, downstream device 126, one or more processors 105, one or more memories 110, privacy configuration component 115, and/or generating component 340 may be configured to or may comprise means for generating an updated non-private video stream of the scene, wherein the updated non-private video stream comprises a remaining non-private area of the scene outside of both the private area defined as the privacy zone and the additional private area defined as the additional privacy zone, both of which are respective non-viewable areas in the non-private video stream.

For example, the generating at block 704 may include modifying, by the downstream device 126, the non-private video stream to account for newly identified private areas. The input is the incoming video stream, along with previously defined privacy zones and any newly detected additional privacy zones. Using computer vision algorithms, such as object detection, region segmentation, and dynamic masking, the system ensures that both the original private area and the additional private area are designated as non-viewable areas in the non-private stream. The output is an updated non-private video stream that retains only the remaining non-private areas while effectively obscuring all sensitive content.

In this optional aspect, at block 706, the method 400 may further include generating an additional private video stream corresponding to the additional non-private video stream, wherein the additional private video stream comprises an additional encrypted version of the additional private area of the additional privacy zone. For example, in an aspect, computer device 101, one or more processors 105, one or more memories 110, privacy configuration component 115, and/or generating component 340 may be configured to or may comprise means for generating an additional private video stream corresponding to the additional non-private video stream, wherein the additional private video stream comprises an additional encrypted version of the additional private area of the additional privacy zone.

For example, the generating at block 706 may include creating, by the downstream device 126, a separate, encrypted video stream that preserves the newly identified additional private area. The input includes the incoming video stream, the defined additional privacy zone, and an encryption mechanism. Using computer vision algorithms such as object tracking and segmentation, the system isolates the additional private area and applies encryption algorithms (e.g., AES, RSA, or homomorphic encryption) to secure this sensitive content. The output is an additional private video stream, containing only the protected area in an encrypted format, ensuring that only authorized users can access it.

In this optional aspect, at block 708, the transmitting at block 406 of the multi-track format video further comprises transmitting the multi-track format video comprises the non-private video stream, the private video stream, and the additional private stream.

For example, this process involves downstream device 126 sending a structured video file that contains multiple synchronized tracks, including the non-private video stream, the private video stream, and the additional private stream. The input includes separate video streams, each processed for a respective level of privacy protection. A multi-track encoding format (such as MP4 with multiple streams, MKV, or adaptive bitrate streaming protocols) is used to combine them into a single file or transmission. This allows playback systems to selectively access or restrict certain tracks based on user permissions. The output is a multi-track video transmission that maintains privacy control while providing flexibility for different use cases. This approach benefits data security, regulatory compliance, and adaptive content accessibility, ensuring that sensitive information is available only to authorized viewers while a non-private version remains accessible for general use.

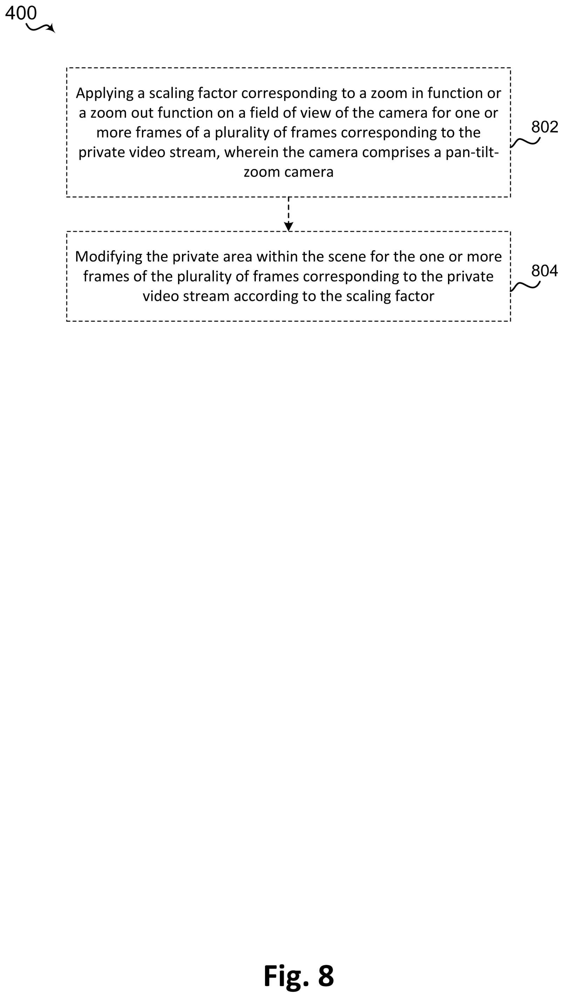

Referring to Fig. 8, in an alternative or additional aspect, at block 802, the method 400 may further include applying a scaling factor corresponding to a zoom in function or a zoom out function on a field of view of the camera for one or more frames of a plurality of frames corresponding to the private video stream, wherein the camera comprises a PTZ camera. For example, in an aspect, computer device 101, one or more processors 105, one or more memories 110, privacy configuration component 115, and/or applying component 345 may be configured to or may comprise means for applying a scaling factor corresponding to a zoom in function or a zoom out function on a field of view of the camera for one or more frames of a plurality of frames corresponding to the private video stream, wherein the camera comprises a pan-tilt-zoom camera.

For example, the applying at block 802 may include dynamically adjusting the zoom level of a PTZ camera to focus on or widen the view of specific areas within the private video stream. The input includes near real-time camera control signals, predefined privacy zones, and potential automated tracking algorithms (such as object detection and motion tracking) that determine the need for zoom adjustments. A scaling factor is applied to modify the field of view, either zooming in to enhance visibility of private areas or zooming out to capture a broader scene. The output is a modified private video stream having adjusted framing and/or image scale to support one or more of visibility, privacy protection, monitoring, analysis, recording, transmission, display, and downstream processing..

In this optional aspect, at block 804, the method 400 may further include modifying the private area within the scene for the one or more frames of the plurality of frames corresponding to the private video stream according to the scaling factor. For example, in an aspect, computer device 101, one or more processors 105, one or more memories 110, privacy configuration component 115, and/or modifying component 350 may be configured to or may comprise means for modifying the private area within the scene for the one or more frames of the plurality of frames corresponding to the private video stream according to the scaling factor.

For example, the modifying at block 804 may include dynamically adjusting the size and positioning of the private area in response to changes in zoom level. The input includes the private video stream, the scaling factor from a zoom-in or zoom-out function, and tracking algorithms (such as object recognition, region scaling, and adaptive masking) to ensure that the private area remains accurately defined across frames. As the camera zooms in, the private area may expand to maintain coverage, whereas zooming out may reduce or reposition the masked region. The output is an updated private video stream where privacy zones are consistently adjusted to match the new field of view. This approach ensures continuous protection of sensitive information, prevents privacy breaches due to zooming effects, and enables adaptive privacy management in dynamic video recording scenarios.

In addition, the non-private area is also similarly scaled based on the scaling factor in response to a zoom-in or zoom-out function. This ensures consistent framing, accurate scaling of protected areas, and a seamless viewing experience, enabling effective privacy management and video usability in near real-time surveillance or recorded footage.

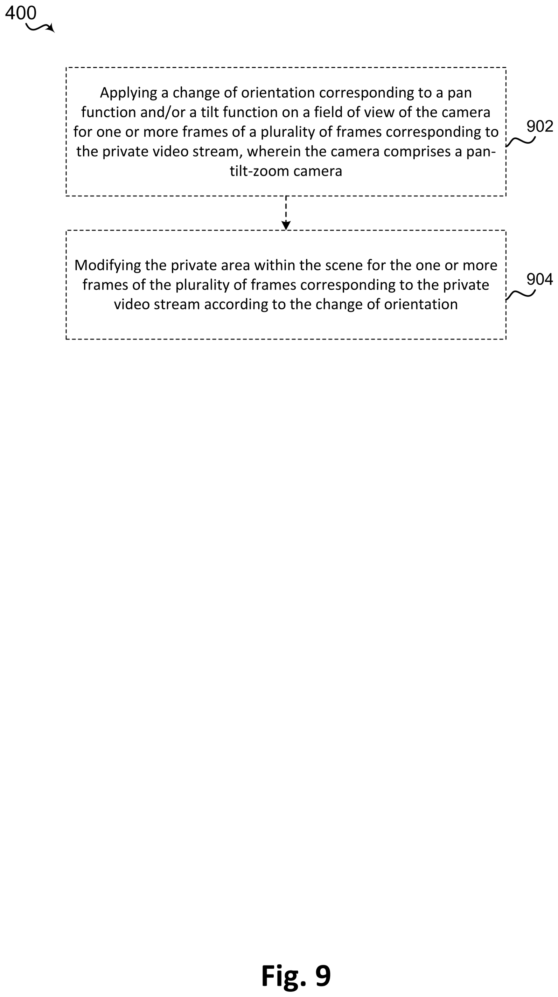

Referring to Fig. 9, in an alternative or additional aspect, at block 902, the method 400 may further include applying a change of orientation corresponding to a pan function and/or a tilt function on a field of view of the camera for one or more frames of a plurality of frames corresponding to the private video stream, wherein the camera comprises a pan-tilt-zoom camera. For example, in an aspect, computer device 101, one or more processors 105, one or more memories 110, privacy configuration component 115, and/or applying component 345 may be configured to or may comprise means for applying a change of orientation corresponding to a pan function and/or a tilt function on a field of view of the camera for one or more frames of a plurality of frames corresponding to the private video stream, wherein the camera comprises a pan-tilt-zoom camera.

For example, the modifying at block 902 may include adjusting the viewing angle of a PTZ camera to follow or reposition the focus within the private video stream. The input includes camera control signals, predefined privacy zones, and tracking algorithms (such as object detection, motion tracking, or automated scene analysis) to determine the necessary adjustments. The pan function shifts the camera's view horizontally, while the tilt function moves the view vertically, ensuring that the private area remains properly framed as the scene changes. The output is an updated private video stream where the camera's orientation dynamically adapts to track sensitive content while maintaining privacy.

In this optional aspect, at block 904, the method 400 may further include modifying the private area within the scene for the one or more frames of the plurality of frames corresponding to the private video stream according to the change of orientation. For example, in an aspect, computer device 101, one or more processors 105, one or more memories 110, privacy configuration component 115, and/or modifying component 350 may be configured to or may comprise means for modifying the private area within the scene for the one or more frames of the plurality of frames corresponding to the private video stream according to the change of orientation.

For example, the modifying at block 904 may include dynamically adjusting the position and coverage of the private area in response to changes in the camera's pan or tilt orientation. The input includes the private video stream, the camera's orientation change data, and tracking algorithms (such as object recognition, collection of polygons adjustment, freeform outline adjustment, pixel mask adjustment, bounding box adjustment, and scene mapping) to continuously reposition and resize the privacy zone as the field of view shifts. As the camera pans or tilts, the private area moves accordingly within the updated frame, ensuring that sensitive content remains protected regardless of camera movement. The output is an updated private video stream with properly adjusted privacy zones, maintaining accurate coverage, consistent privacy protection, and seamless adaptation to dynamic scene changes.

In some implementations, the system utilizes a global coordinate mapping engine to synchronize the privacy zone with moving objects during simultaneous camera movement (e.g., panning, tilting, or zooming). Instead of defining the privacy zone solely by two-dimensional (2D) pixel coordinates within a specific frame, the system maps the detected object to a three-dimensional (3D) world coordinate system or a persistent global scene map. By integrating near real-time telemetry data from the PTZ camera (e.g., current pan/tilt angles and focal length) with the tracking algorithm results, the system calculates a relative transform that maintains the privacy zone's alignment with the physical object regardless of the camera's changing orientation or field of view. This ensures that even if the camera is in motion while the tracked object is also moving, the encrypted privacy zone remains anchored to the object's global position. This coordinate-based anchoring prevents 'masking lag' or 'privacy leakage' that typically occurs in purely frame-based tracking systems during high-speed PTZ operations.

In addition, the non-private area may also have a similar change of orientation corresponding to a pan function and/or a tilt function applied to ensure that the visible, non-private portions of the video stream also dynamically adjust in response to the camera's movement. The input includes the non-private video stream, the camera's pan and tilt control data, and frame mapping algorithms that maintain the correct spatial relationship between private and non-private areas. As the camera pans or tilts, the non-private area shifts accordingly, reflecting the new field of view while ensuring that privacy-protected regions remain obscured. The output is an updated non-private video stream, where the scene continuously aligns with the camera's adjusted orientation.

Referring to Fig. 10, in an alternative or additional aspect, at block 1002, the method 400 may further include identifying one or more objects in a plurality of frames by analyzing each frame using a prepared object detection machine learning (ML) model, wherein the plurality of frames comprises a full field of view of the scene from the camera. For example, in an aspect, computer device 101, one or more processors 105, one or more memories 110, privacy configuration component 115, and/or identifying component 335 may be configured to or may comprise means for identifying one or more objects in a plurality of frames by analyzing each frame using a prepared object detection machine learning (ML) model, wherein the plurality of frames comprise a full field of view of the scene from the camera.

For example, the identifying at block 1002 may include automatically detecting and classifying objects within a video stream using AI-based image analysis. The input includes a plurality of frames representing the full field of view of the camera's scene. A pre-trained object detection machine learning (ML) model (such as YOLO, Faster R-CNN, or SSD) processes each frame, extracting object features and assigning labels based on trained categories (e.g., people, vehicles, or specific objects). The output is a set of identified objects along with their bounding box coordinates, classifications, and confidence scores across frames. In this way, the privacy zones may become dynamic, and the system can apply video redaction to moving objects in the scene.

In this optional aspect, at block 1004, the method 400 may further include applying a tracking algorithm for each of the one or more objects within a range of frames of the plurality of frames to identify a respective frame location of each object. For example, in an aspect, computer device 101, one or more processors 105, one or more memories 110, privacy configuration component 115, and/or applying component 345 may be configured to or may comprise means for applying a tracking algorithm for each of the one or more objects within a range of frames of the plurality of frames to identify a respective frame location of each object.

For example, the applying at block 1004 may include continuously monitoring the movement of detected objects across multiple frames. The input includes the object detection results (bounding box coordinates and classifications) and the sequence of video frames. A tracking algorithm (e.g., SORT (Simple Online and Realtime Tracker), DeepSORT, Kalman filters, or optical flow-based tracking) is applied to maintain object identity and predict the movement of the object across frames. The output includes a trajectory map of the tracked object's location over time, ensuring accurate tracking even if objects momentarily disappear or change position.

In this optional aspect, at block 1006, the method 400 may further include generating at least one of a respective collection of polygons, a respective freeform outline, a respective pixel mask, or a respective bounding box overlying each object for each frame in the range of frames. For example, in an aspect, computer device 101, one or more processors 105, one or more memories 110, privacy configuration component 115, and/or generating component 340 may be configured to or may comprise means for generating at least one of a respective collection of polygons, a respective freeform outline, a respective pixel mask, or a respective bounding box overlying each object for each frame in the range of frames.

For example, the generating at block 1006 may include drawing a rectangular region around detected objects to visually and computationally track them across multiple frames. The input includes object detection results from a machine learning model (e.g., You Only Look Once (YOLO), Faster Region-Based Convolutional Neural Network (R-CNN)) and tracking data from algorithms like DeepSORT or Kalman filters. Using these inputs, a bounding box is dynamically generated for each identified object, updating the position and size of the bounding box in every frame where the object appears. The output of this process is video frames with accurately placed bounding boxes that provide near real-time visual markers for object locations.

In this optional aspect, at block 1008, the method 400 may further include encrypting each respective collection of polygons, a respective freeform outline, a respective pixel mask, or a respective bounding box in the range of frames with at least one encryption key to define one or more respective non-viewable areas in the non-private video stream. For example, in an aspect, computer device 101, one or more processors 105, one or more memories 110, privacy configuration component 115, and/or encrypting component 355 may be configured to or may comprise means for encrypting each respective collection of polygons, a respective freeform outline, a respective pixel mask, or a respective bounding box in the range of frames with at least one encryption key to define one or more respective non-viewable areas in the non-private video stream.

For example, the encrypting at block 1008 may include encrypting each bounding box within a specified range of video frames using at least one encryption key, ensuring that designated areas remain non-viewable in the non-private video stream. The inputs include the video frames, bounding box coordinates, and encryption keys. A cryptographic algorithm, such as AES or a secure pixel substitution method, is applied to the pixel data within each bounding box, rendering the selected regions indecipherable without the corresponding decryption key. It should be noted that although the example above describes the encryption with respect to a bounding box, it should be noted that the encryption can be applied to other ways to define regions of interest (ROI) in an image such as a collection of polygons, a freeform outline, or a pixel mask.

In this optional aspect, at block 1010, the method 400 may further include preparing the object detection ML model using a training dataset comprising of images of objects and an object label identifying each object in the images to visually detect and distinguish between different objects. For example, in an aspect, computer device 101, one or more processors 105, one or more memories 110, privacy configuration component 115, and/or preparing component 360 may be configured to or may comprise means for preparing the object detection ML model using a training dataset comprising of images of objects and an object label identifying each object in the images to visually detect and distinguish between different objects.

For example, the preparing at block 1010 may include training the object detection ML model on a training dataset containing labeled images of various objects. The inputs include a collection of images with annotated object labels, which identify the objects present in each image. A deep learning algorithm, such as a convolutional neural network (CNN) or a model like YOLO or Faster R-CNN, processes the images to learn patterns, features, and spatial relationships. During training, the model iteratively adjusts model parameters to optimize accuracy in detecting and distinguishing between different objects. The output is a trained ML model capable of accurately identifying and classifying objects in new images or video frames.

In this optional aspect, at block 1012, the method 400 may further include incorporating alpha-channel data in each frame of the private video stream and the non-private video stream of the multi-track video format to manage dynamic privacy zones. For example, incorporating alpha-channel data in each frame of both the private video frames and the non-private video streams within the multi-track video format enables dynamic privacy zones by allowing selective transparency and compositing during playback or processing. In some aspects, the alpha-channel dictates the visibility of specific areas in each frame, enabling seamless integration of private and non-private video content. By defining which pixels are transparent, opaque, or partially visible, the system dynamically manages privacy zones, ensuring that sensitive areas can be revealed or concealed in near real-time based on predefined rules. During frame reconstruction, the non-private video serves as the base layer, with the alpha channel mask applied to define which portions are visible. The private video is then overlaid only where the alpha mask allows, resulting in a final frame that adheres to privacy constraints while maintaining content integrity.

For example, in multi-track video processing, capturing region masks that distinguish between private and non-private data plays a role in accurately reconstructing frames. These masks serve a similar role to the alpha-channel in PNG images, indicating which pixels contain no data and ensuring seamless overlaying of tracks during frame reconstitution. Integrating an alpha channel within multi-track video significantly aids in managing dynamic privacy zones. Since these zones can shift from frame to frame, embedding alpha-channel information in every frame helps for maintaining proper alignment and coherence across tracks. This approach enhances the ability to handle privacy-sensitive content while preserving the integrity of the reconstructed video. By leveraging alpha-channel data, the multi-track format allows for efficient storage, near real-time privacy adjustments, and seamless compositing of private and non-private streams, ensuring both security and compliance with privacy regulations.

While the foregoing disclosure discusses illustrative aspects and/or embodiments, it should be noted that various changes and modifications could be made herein without departing from the scope of the described aspects and/or embodiments as defined by the appended claims. Furthermore, although elements of the described aspects and/or embodiments may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise.

Further embodiments of the present invention may be summarized as follows. Any of these embodiments can be claimed in a separate claim, e.g. by substituting the word "Embodiment" by "Claim", in particular in the order as mentioned below and/or in any combination with any embodiment described above or with any of the features of the attached claims.

Embodiment 1. A method of recording one or more images, comprising:
obtaining a non-private video stream of a scene captured by a camera, wherein the non-private video stream comprises a non-private area of the scene and a private area within the scene defined as a privacy zone, wherein the private area in the non-private video stream is a non-viewable area in the non-private video stream;
obtaining a private video stream corresponding to the non-private video stream, wherein the private video stream comprises an encrypted version of the private area of the privacy zone; and
transmitting a multi-track format video comprising the non-private video stream and the private video stream.

Embodiment 2. The method of embodiment 1, wherein transmitting the multi-track format video further comprises transmitting by the camera.

Embodiment 3. The method of embodiment 1 or 2, further comprising: receiving, by a device from the camera via a wired or wireless communication network, an incoming video stream of the scene from the camera, wherein the non-private video stream and the private video stream are based on the incoming video stream.

Embodiment 4. The method of any of embodiments 1 to 3, wherein the incoming video stream comprises the non-private video stream and the private video stream.

Embodiment 5. The method of any of embodiments 1 to 4, further comprising:
identifying an additional private area within the scene defined as an additional privacy zone;
generating an updated non-private video stream of the scene, wherein the updated non-private video stream comprises a remaining non-private area of the scene outside of both the private area defined as the privacy zone and the additional private area defined as the additional privacy zone, both of which are respective non-viewable areas in the non-private video stream; and
generating an additional private video stream corresponding to the additional non-private video stream, wherein the additional private video stream comprises an additional encrypted version of the additional private area of the additional privacy zone;
wherein transmitting the multi-track format video further comprises transmitting the multi-track format video comprising the non-private video stream, the private video stream, and the additional private stream.

Embodiment 6. The method of any of embodiments 1 to 5, wherein obtaining the non-private video stream further comprises generating the non-private video stream from the incoming video stream, and wherein obtaining the private video stream further comprises generating the private video stream from the incoming video stream.

Embodiment 7. The method of any of embodiments 1 to 6, wherein the non-private video stream and the private video stream each comprise a plurality of corresponding frames, wherein the private area within the scene has a first relative frame location within a first frame of the plurality of corresponding frames and a second relative frame location within a second frame of the plurality of corresponding frames, wherein the second relative frame location is different from the first relative frame location.

Embodiment 8. The method of any of embodiments 1 to 7, further comprising:
applying a scaling factor corresponding to a zoom in function or a zoom out function on a field of view of the camera for one or more frames of a plurality of frames corresponding to the private video stream, wherein the camera comprises a pan-tilt-zoom camera; and
modifying the private area within the scene for the one or more frames of the plurality of frames corresponding to the private video stream according to the scaling factor.

Embodiment 9. The method of any of embodiments 1 to 8, further comprising:
applying a change of orientation corresponding to a pan function and/or a tilt function on a field of view of the camera for one or more frames of a plurality of frames corresponding to the private video stream, wherein the camera comprises a pan-tilt-zoom camera; and
modifying the private area within the scene for the one or more frames of the plurality of frames corresponding to the private video stream according to the change of orientation.

Embodiment 10. The method of any of embodiments 1 to 9, further comprising:
identifying one or more objects in a plurality of frames by analyzing each frame using a prepared object detection machine learning (ML) model, wherein the plurality of frames comprises a full field of view of the scene from the camera;
applying a tracking algorithm for each of the one or more objects within a range of frames of the plurality of frames to identify a respective frame location of each object;
generating at least one of a respective collection of polygons, a respective freeform outline, a respective pixel mask, or a respective bounding box overlying each object for each frame in the range of frames; and
encrypting each respective collection of polygons, a respective freeform outline, a respective pixel mask, or a respective bounding box in the range of frames with at least one encryption key to define one or more respective non-viewable areas in the non-private video stream.

Embodiment 11. The method of any of embodiments 1 to 10, further comprising:
preparing the object detection ML model using a training dataset comprising of images of objects and an object label identifying each object in the images to visually detect and distinguish between different objects.

Embodiment 12. The method of any of embodiments 1 to 11, further comprising:
incorporating alpha-channel data in each frame of the private video stream and the non-private video stream of the multi-track video format to manage dynamic privacy zones.

Embodiment 13. An apparatus for recording one or more images, comprising:
one or more memories; and
one or more processors coupled with one or more memories and configured, individually or in combination, to perform the method according to any of embodiments 1 to 12, in particular to:
   obtain a non-private video stream of a scene captured by a camera, wherein the non-private video stream comprises a non-private area of the scene and a private area within the scene defined as a privacy zone, wherein the private area in the non-private video stream is a non-viewable area in the non-private video stream;
   obtain a private video stream corresponding to the non-private video stream, wherein the private video stream comprises an encrypted version of the private area of the privacy zone; and
   transmit a multi-track format video comprising the non-private video stream and the private video stream.

Embodiment 14. The apparatus of embodiment 13, wherein to transmit the multi-track format video the one or more processors are further configured to transmit by the camera.

Embodiment 15. The apparatus of embodiment 13 or 14, wherein the one or more processors are further configured to:
receive, by a device from the camera via a wired or wireless communication network, an incoming video stream of the scene from the camera, wherein the non-private video stream and the private video stream are based on the incoming video stream.

Embodiment 16. The apparatus of any of embodiments 13 to 15, wherein the incoming video stream comprises the non-private video stream and the private video stream.

Embodiment 17. The apparatus of any of embodiments 13 to 16, wherein the one or more processors are further configured to:
identify an additional private area within the scene defined as an additional privacy zone;
generate an updated non-private video stream of the scene, wherein the updated non-private video stream comprises a remaining non-private area of the scene outside of both the private area defined as the privacy zone and the additional private area defined as the additional privacy zone, both of which are respective non-viewable areas in the non-private video stream; and
generate an additional private video stream corresponding to the additional non-private video stream, wherein the additional private video stream comprises an additional encrypted version of the additional private area of the additional privacy zone,
wherein to transmit the multi-track format video the one or more processors are further configured to transmit the multi-track format video comprising the non-private video stream, the private video stream, and the additional private stream.

Embodiment 18. The apparatus of any of embodiments 13 to 17, wherein to obtain the non-private video stream the one or more processors are further configured to generate the non-private video stream from the incoming video stream, and wherein to obtain the private video stream the one or more processors are further configured to generate the private video stream from the incoming video stream.

Embodiment 19. The apparatus of any of embodiments 13 to 18, wherein the non-private video stream and the private video stream each comprise a plurality of corresponding frames, wherein the private area within the scene has a first relative frame location within a first frame of the plurality of corresponding frames and a second relative frame location within a second frame of the plurality of corresponding frames, wherein the second relative frame location is different from the first relative frame location.

Embodiment 20. A non-transitory computer readable medium storing thereon computer executable instructions for recording one or more images, including instructions for performing the method according to any of embodiments 1 to 12, in particular for:
obtaining a non-private video stream of a scene captured by a camera, wherein the non-private video stream comprises a non-private area of the scene and a private area within the scene defined as a privacy zone, wherein the private area in the non-private video stream is a non-viewable area in the non-private video stream;
obtaining a private video stream corresponding to the non-private video stream, wherein the private video stream comprises an encrypted version of the private area of the privacy zone; and
transmitting a multi-track format video comprising the non-private video stream and the private video stream.

Embodiment 21. One or more computer-readable non-transitory storage media embodying software that is operable when executed to perform a method according to any of embodiments 1 to 12.

Embodiment 22. A system comprising: one or more processors; and at least one memory coupled to the processors and comprising instructions executable by the processors, the processors operable when executing the instructions to perform a method according to any of embodiments 1 to 12.

Embodiment 23. A computer program product, preferably comprising a computer-readable non-transitory storage media, that is operable when executed on a data processing system to perform a method according to any of embodiments 1 to 12.

## Claims

1. A method of recording one or more images, comprising:
obtaining a non-private video stream of a scene captured by a camera, wherein the non-private video stream comprises a non-private area of the scene and a private area within the scene defined as a privacy zone, wherein the private area in the non-private video stream is a non-viewable area in the non-private video stream;
obtaining a private video stream corresponding to the non-private video stream, wherein the private video stream comprises an encrypted version of the private area of the privacy zone; and
transmitting a multi-track format video comprising the non-private video stream and the private video stream.

2. The method of claim 1, wherein transmitting the multi-track format video further comprises transmitting by the camera.

3. The method of claim 1 or 2, further comprising:
receiving, by a device from the camera via a wired or wireless communication network, an incoming video stream of the scene from the camera, wherein the non-private video stream and the private video stream are based on the incoming video stream.

4. The method of claim 3, wherein the incoming video stream comprises the non-private video stream and the private video stream;
optionally, further comprising:
identifying an additional private area within the scene defined as an additional privacy zone;
generating an updated non-private video stream of the scene, wherein the updated non-private video stream comprises a remaining non-private area of the scene outside of both the private area defined as the privacy zone and the additional private area defined as the additional privacy zone, both of which are respective non-viewable areas in the non-private video stream; and
generating an additional private video stream corresponding to the additional non-private video stream, wherein the additional private video stream comprises an additional encrypted version of the additional private area of the additional privacy zone;
wherein transmitting the multi-track format video further comprises transmitting the multi-track format video comprising the non-private video stream, the private video stream, and the additional private stream.

5. The method of claim 3 or 4, wherein obtaining the non-private video stream further comprises generating the non-private video stream from the incoming video stream, and wherein obtaining the private video stream further comprises generating the private video stream from the incoming video stream.

6. The method of any of claims 1 to 5, wherein the non-private video stream and the private video stream each comprise a plurality of corresponding frames, wherein the private area within the scene has a first relative frame location within a first frame of the plurality of corresponding frames and a second relative frame location within a second frame of the plurality of corresponding frames, wherein the second relative frame location is different from the first relative frame location.

7. The method of any of claims 1 to 6, further comprising:
applying a scaling factor corresponding to a zoom in function or a zoom out function on a field of view of the camera for one or more frames of a plurality of frames corresponding to the private video stream, wherein the camera comprises a pan-tilt-zoom camera; and
modifying the private area within the scene for the one or more frames of the plurality of frames corresponding to the private video stream according to the scaling factor; and/or
further comprising:
applying a change of orientation corresponding to a pan function and/or a tilt function on a field of view of the camera for one or more frames of a plurality of frames corresponding to the private video stream, wherein the camera comprises a pan-tilt-zoom camera; and
modifying the private area within the scene for the one or more frames of the plurality of frames corresponding to the private video stream according to the change of orientation; and/or
further comprising:
incorporating alpha-channel data in each frame of the private video stream and the non-private video stream of the multi-track video format to manage dynamic privacy zones.

8. The method of any of claims 1 to 7, further comprising:
identifying one or more objects in a plurality of frames by analyzing each frame using a prepared object detection machine learning (ML) model, wherein the plurality of frames comprises a full field of view of the scene from the camera;
applying a tracking algorithm for each of the one or more objects within a range of frames of the plurality of frames to identify a respective frame location of each object;
generating at least one of a respective collection of polygons, a respective freeform outline, a respective pixel mask, or a respective bounding box overlying each object for each frame in the range of frames; and
encrypting each respective collection of polygons, a respective freeform outline, a respective pixel mask, or a respective bounding box in the range of frames with at least one encryption key to define one or more respective non-viewable areas in the non-private video stream;
optionally, further comprising:
preparing the object detection ML model using a training dataset comprising of images of objects and an object label identifying each object in the images to visually detect and distinguish between different objects.

9. An apparatus for recording one or more images, comprising:
one or more memories; and
one or more processors coupled with one or more memories and configured, individually or in combination, to:
obtain a non-private video stream of a scene captured by a camera, wherein the non-private video stream comprises a non-private area of the scene and a private area within the scene defined as a privacy zone, wherein the private area in the non-private video stream is a non-viewable area in the non-private video stream;
obtain a private video stream corresponding to the non-private video stream, wherein the private video stream comprises an encrypted version of the private area of the privacy zone; and
transmit a multi-track format video comprising the non-private video stream and the private video stream.

10. The apparatus of claim 9, wherein to transmit the multi-track format video the one or more processors are further configured to transmit by the camera.

11. The apparatus of claim 9 or 10, wherein the one or more processors are further configured to:
receive, by a device from the camera via a wired or wireless communication network, an incoming video stream of the scene from the camera, wherein the non-private video stream and the private video stream are based on the incoming video stream.

12. The apparatus of claim 11, wherein the incoming video stream comprises the non-private video stream and the private video stream;
optionally, wherein the one or more processors are further configured to:
identify an additional private area within the scene defined as an additional privacy zone;
generate an updated non-private video stream of the scene, wherein the updated non-private video stream comprises a remaining non-private area of the scene outside of both the private area defined as the privacy zone and the additional private area defined as the additional privacy zone, both of which are respective non-viewable areas in the non-private video stream; and
generate an additional private video stream corresponding to the additional non-private video stream, wherein the additional private video stream comprises an additional encrypted version of the additional private area of the additional privacy zone,
wherein to transmit the multi-track format video the one or more processors are further configured to transmit the multi-track format video comprising the non-private video stream, the private video stream, and the additional private stream.

13. The apparatus of claim 11 or 12, wherein to obtain the non-private video stream the one or more processors are further configured to generate the non-private video stream from the incoming video stream, and wherein to obtain the private video stream the one or more processors are further configured to generate the private video stream from the incoming video stream.

14. The apparatus of any of claims 9 to 13, wherein the non-private video stream and the private video stream each comprise a plurality of corresponding frames, wherein the private area within the scene has a first relative frame location within a first frame of the plurality of corresponding frames and a second relative frame location within a second frame of the plurality of corresponding frames, wherein the second relative frame location is different from the first relative frame location.

15. A non-transitory computer readable medium storing thereon computer executable instructions for recording one or more images, including instructions for performing:
obtaining a non-private video stream of a scene captured by a camera, wherein the non-private video stream comprises a non-private area of the scene and a private area within the scene defined as a privacy zone, wherein the private area in the non-private video stream is a non-viewable area in the non-private video stream;
obtaining a private video stream corresponding to the non-private video stream, wherein the private video stream comprises an encrypted version of the private area of the privacy zone; and
transmitting a multi-track format video comprising the non-private video stream and the private video stream.
